# EUROPEAN PATENT APPLICATION

(11) **EP 4 682 443 A1**
(43) Date of publication of application: **21.01.2026**
(21) Application number: 24189440.1
(22) Date of filing: 18.07.2024
(51) Int. Cl.: F25B 13/00, F24F 11/36, F25B 41/20, F25B 49/00, F25B 49/02, F16K 17/40, F16K 31/02, F16K 31/44, F25B 45/00

(54) **RELEASE DEVICE AND HEAT PUMP SYSTEM COMPRISING THE SAME**

(71) Applicant: Daikin Europe N.V., 8400 Oostende (BE)
(72) Inventor: TACK, Lukas, 8400 Oostende (BE); SCARPATI, Giuseppe, 8400 Oostende (BE); CORNELIS, Kevin, 8400 Oostende (BE); LA GAIPA, Giuliano, 8400 Oostende (BE); POTTEVIJN, Dries, 8400 Oostende (BE); PIRMEZ, Pieter, 8400 Oostende (BE)
(74) Representative: Hoffmann Eitle

(57) **Abstract**

The present disclosure relates to a release device (100) for releasing refrigerant from a refrigerant circuit of a heat pump system (10) to an outside of the heat pump system (10) in case of a refrigerant leakage in the refrigerant circuit. The refrigerant circuit connects a compressor (11), a usage side heat exchanger (12), an expansion valve (13), and a heat source side heat exchanger (14). The release device (100) comprises a body (101) connectable to the refrigerant circuit and having a release opening (102), a breakable sacrificial seal (104), and a trigger mechanism (106). The breakable sacrificial seal (104) gas-tightly seals the release opening (102) and thereby the refrigerant circuit from the outside of the refrigerant circuit. The trigger mechanism (106) is connectable to and controllable by a controller (18) to actively trigger the breakage of the sacrificial seal (104) upon detection of a refrigerant leakage in the refrigerant circuit to release the refrigerant from the refrigerant circuit to the outside of the refrigerant circuit. The present disclosure also relates to a heat pump system (10) comprising said release device (100).

## Description

### BACKGROUND OF THE INVENTION

### Technical Field

The present disclosure relates to a release device for releasing refrigerant from a refrigerant circuit of a heat pump system to an outside of the heat pump system in case of a refrigerant leakage in the refrigerant circuit and to a heat pump system comprising the same.

### Background of the Present Disclosure

In general, heat pump systems that comprise a compressor, a utilization side heat exchanger, an expansion mechanism, and a heat source side heat exchanger, which are fluidly connected in series to constitute a refrigerant circuit, are known in the prior art. Such refrigerant circuits enable, for example, to provide cooling or heating depending on the direction in which a refrigerant is flown through said refrigerant circuit.

Nowadays, heat pump systems often use flammable and/or toxic refrigerants. Those refrigerants ask for specific safety measures to, in the event of a leakage in an indoor unit accommodating the utilization side heat exchanger, prevent that the mass of refrigerant leaking into the indoor space accommodating the indoor unit exceeds a predetermined value.

A well-known safety measure to prevent the same is the so-called pump-down operation. Thereby, in case of leakage in the indoor unit, refrigerant is pumped from said indoor unit towards and into an outdoor unit accommodating the heat source side heat exchanger. Accordingly, the mass of refrigerant leaking into the indoor space can be minimized.

Alternatively or additionally, shut-off valves to shut off the indoor unit from the remainder of the refrigerant circuit may be provided. Thereby the mass of refrigerant leaking into the indoor space may be limited to the amount trapped in the indoor unit.

Specific heat pump systems use carbon dioxide (CO₂) as a refrigerant, which comprises a lower global warming potential than, e.g., R32. However, the use of carbon dioxide as the refrigerant in the refrigerant circuit requires further modifications to the heat pump system due to the higher pressure of the refrigerant and the associated higher mass flow rate in case of a leak.

A problem associated with the above-discussed well-known shut-off valves is that they trap refrigerant in the indoor space. This provokes that too much (mass of) refrigerant is released into the indoor space in the event of a refrigerant leakage.

To avoid exceeding the maximum allowable indoor concentration of refrigerant, it is essential that the refrigerant mass flow leakage rate is minimized as quickly as possible. Further, the shut-off valves are relatively expensive increasing the overall costs of the heat pump system. Even further, the achievable gas-tightness of commonly used shut-off valves is oftentimes not sufficiently high over a long period of time when being applied to a heat pump system using carbon dioxide used as a refrigerant.

An alternative safety measure is, therefore, disclosed in JP 5292940 B2, which discloses to open a solenoid valve as a release valve and discharge/release the refrigerant in the refrigerant circuit to the atmosphere and, hence, the outside of the refrigerant circuit/heat pump system.

Yet, the achievable gas-tightness of solenoid valves is oftentimes not sufficiently high over a long period of time when being applied to a heat pump system using carbon dioxide as a refrigerant.

A known approach to address the gas-tightness issue discussed above is the provision of so-called rupture discs in the refrigerant circuit. An example thereof is given in EP 2 245 392 A1, wherein such a conventionally known rupture disc is connected to a refrigerant circuit using CO₂ as the refrigerant, for example, by way of accommodating said rupture disc in a body to gas-tightly seal the refrigerant circuit from the outside of the refrigerant circuit during a normal operation of the heat pump system.

As the name implies, such known rupture discs are configured to automatically rupture or burst once a predetermined pressure threshold inside the refrigerant circuit is exceeded. Thus, the rupture disc known from EP 2 245 392 A1 may equally be understood as a pressure relief device: Once the rupture disc has (automatically) ruptured, a flow path is formed/opened from inside the refrigerant circuit to an outside of the heat pump system to release at least part of the refrigerant of the refrigerant circuit and to thereby reduce the (excessive) refrigerant pressure inside the refrigerant circuit.

However, said passively operating rupture discs can hardly improve the operational security of the heat pump system, as the refrigerant pressure may vary inside the refrigerant circuit and may, in a worst case scenario, result in an accidental bursting of a rupture disc. Particularly the use of high-pressure refrigerants, such as carbon dioxide, in the refrigerant circuit furthermore makes the (pre-) determination of a precise pressure threshold for triggering the bursting of the rupture disc very difficult.

On top of that, the occurrence of a refrigerant leakage in the refrigerant circuit may result in a pressure drop in the refrigerant circuit, such that the safety-release of refrigerant from the refrigerant circuit cannot be achieved by the provision of the passively operating rupture disc and the problem of an overrun of the maximum allowable indoor concentration of refrigerant inside the indoor space is still unaddressed.

### SUMMARY OF THE INVENTION

In view of the above, it is an object of the present disclosure to provide a safer and more reliable release device for releasing refrigerant from a refrigerant circuit of a heat pump system to an outside of the heat pump system in case of a refrigerant leakage in the refrigerant circuit. Furthermore, it is also an object of the present disclosure to provide a safer and more reliable heat pump system comprising such a release device.

This object is solved by means of a release device according to independent claim 1 and/or a heat pump system according to independent claim 10. Distinct embodiments are derivable from the dependent claims.

A first aspect of the present disclosure is directed towards a release device. Said release device is suitable to release refrigerant from a refrigerant circuit of a heat pump system to an outside of the heat pump system in case of a refrigerant leakage in the refrigerant circuit. The refrigerant circuit connects a compressor, a usage side heat exchanger, an expansion valve, and a heat source side heat exchanger. In detail, the refrigerant circuit connects a compressor, a usage side heat exchanger, an expansion valve, and a heat source side heat exchanger by refrigerant pipes to circulate a refrigerant for heat exchange. In other words, it constitutes a standard refrigerant circuit of a heat pump system, which comprises at least one compressor, at least one usage side heat exchanger, at least one expansion valve, and at least one heat source side heat exchanger. Yet, it may equally be possible to respectively provide a plurality of said features being connected in the refrigerant circuit.

The release device of the present disclosure comprises a body connectable to the refrigerant circuit and having a release opening. The release device of the present disclosure further comprises a breakable sacrificial seal and a trigger mechanism.

The breakable sacrificial seal gas-tightly seals the release opening and thereby the refrigerant circuit from the outside of the refrigerant circuit. To integrate the breakable sacrificial seal in the refrigerant circuit, the breakable sacrificial seal is accommodated in the body of the release device to interact with the release opening of the body.

The term "gas-tightly" defines that the refrigerant circuit can be sealed reliably during a normal operation of the connectable heat pump system by way of said breakable sacrificial seal, even when refrigerants with a low GWP, such as carbon dioxide, which is operated under a relatively high pressure, are used. The release device provided with the breakable sacrificial seal is connectable to any pipe connecting between two of the compressor, the usage side heat exchanger, the expansion valve, and the heat source side heat exchanger, which are connected to form the refrigerant circuit during a regular (e.g., heating or cooling) operation of the heat pump system. During the normal operation, the refrigerant is not leaked from the release device via the breakable sacrificial seal.

As the name implies, the term "breakable sacrificial seal" not only stands for a sealing element that is suitable to form part of a refrigerant circuit and stay shut, i.e., sealed, during a normal operation, but also represents an element that can and shall be broken, when this is triggered, to allow the refrigerant to be evacuated from the refrigerant circuit, particularly through the release opening of the release device's body. As is apparent from the outlines further down below, the term *"broken"* may equally be understood as being ruptured or having burst.

To do so, the trigger mechanism is connectable to and controllable by a controller to actively trigger, and thereby induce, the breakage of the sacrificial seal upon detection of a refrigerant leakage in the refrigerant circuit to release the refrigerant from the refrigerant circuit to the outside of the refrigerant circuit. Put differently, once a refrigerant leakage in the refrigerant circuit is detected, the safety procedure of evacuating the refrigerant from the refrigerant circuit gets activated by the triggered breakage of the sacrificial seal.

It follows that it is the key concept of the present disclosure to provide a release device that actively controls and activates, i.e., pilots, the breakage of the sacrificial seal when a leakage in the refrigerant circuit is detected. Put differently, the release device actively induces the safety measure to avoid exceeding the maximum allowable indoor concentration of refrigerant in a fast, cheap, and reliable manner.

The release device according to the present disclosure does not (passively) react to an overpressure in the system as known from the prior art. Instead, it provides a more precise, safer, and more reliable solution, as it introduces an active triggering of the breakage of the breakable sacrificial seal when a hazardous situation, i.e., a refrigerant leakage, occurs. This potentially hazardous situation resulting from exceeding the maximum allowable/acceptable indoor concentration of refrigerant may be averted by actively releasing the refrigerant from the refrigerant circuit via the release device, particularly via the release opening of its body, to an outside of the heat pump system.

Optionally, the controller may form part of the release device.

Optionally, the trigger mechanism may be connectable to, preferably may comprise, a refrigerant detection sensor configured to detect the refrigerant leakage in the refrigerant circuit.

Preferably, the breakable sacrificial seal or the entire release device may be a disposable. More preferably, the breakable sacrificial seal or the entire release device may be a replaceable disposable.

This underscores that the breakable sacrificial seal/the release device is constituted as a cheap and replaceable element that, once the emergency refrigerant release via the sacrificial seal has been performed and its service life has accordingly expired due to not being re-usable, can easily be replaced. Thus, the release device, and the potentially connected heat pump system making use of the same, can be brought back to an operating state with very little service costs and maintenance time.

The trigger mechanism of the release device according to any of the preceding aspects may be configured in various ways.

For example, the trigger mechanism may comprise a mechanical impact device configured to induce a mechanical impact on the sacrificial seal and thereby break the sacrificial seal. Bursting/breaking the sacrificial seal to allow the refrigerant inside the refrigerant circuit to be released to the outside of the heat pump system by way of a mechanical impact allows to obtain a quick opening, i.e., a fast rupture of the sacrificial seal.

An even faster rupture of the sacrificial seal by way of the trigger mechanism can be achieved by the alternative provision of an explosive charge configured to induce an explosion impact on the sacrificial seal and thereby break the sacrificial seal. Accordingly, the operational safety can be increased even further. Such an explosive charge may also be understood as a pyrotechnical charge, for example in the form of an explosive bolt, which is typically activated by an electric current, wherein the explosive/pyrotechnical charge, upon the triggered actuation, breaks the bolt into pieces.

According to a further exemplary configuration of the trigger mechanism of the release device, the trigger mechanism may comprise a heater for increasing the temperature of the sacrificial seal and thereby triggering the breakage of the sacrificial seal.

The heater may thereby be a resistive member or an inductive member. Both the resistive member and the inductive member are capable to increase the temperature of the sacrificial seal to thereby trigger the breakage of the sacrificial seal.

The provision of a heater in general allows to weaken the sacrificial seal to such an extent that it can be broken by the refrigerant pressure inside the refrigerant circuit acting on the weakened sacrificial seal and/or it can be weakened to such an extent that the sacrificial seal ruptures by itself.

In a preferred configuration of the heater, the sacrificial seal may therefore be a rupture disc made of a material having a first mechanical strength up to a predefined temperature and a second mechanical strength lower than the first mechanical strength at a temperature higher than the predefined temperature, whereby the rupture disc is weakened when heated by the heater so that the rupture disc is breakable by the pressure of the refrigerant in the refrigerant circuit thereby breaking the sacrificial seal.

To achieve a reliable operation of the release device and to prevent an accidental, undesired actuation of the same, the predefined temperature is chosen to be at least 20% above the maximum refrigerant temperature in the heat pump system to which the release device can be applied and/or above the maximum temperature during transport and storage of the release device.

Vice versa, the first mechanical strength is chosen to be above the maximum pressure prevailing in the refrigerant circuit during an operation of the heat pump system. Vice versa, the second mechanical strength is to be chosen in a range which equals the pressure prevailing in the refrigerant circuit during an operation of the heat pump system, such that the weakened rupture disc that has been heated above the predefined temperature can be broken by the pressure of the refrigerant in the refrigerant circuit.

Accordingly, a simple and cheap configuration for increasing the operational safety of a release device can be provided, as it suffices to heat the sacrificial seal above the predefined temperature to trigger the refrigerant release after a leakage detection.

It is thereby even more preferred that the rupture disc may have target breaking points, preferably crossing lines, more preferably crossing lines separating the rupture disc into a plurality of circle sectors.

This allows to provoke an even faster and easier bursting of the sacrificial seal once the temperature increase is induced by the heater, as the target breaking points support the weakening of the rupture disc induced by the temperature increase.

In an alternative, preferred configuration of the heater, the sacrificial seal may be a fusible plug made of a material having a melting point at a predefined melting temperature, so that the fusible plug is melted when heated by the heater thereby breaking the sacrificial seal.

To achieve a reliable operation of the release device and to prevent an accidental, undesired actuation of the same, the predefined melting temperature is chosen to be at least 20% above the maximum refrigerant temperature in the heat pump system to which the release device can be applied and/or above the maximum temperature during transport and storage of the release device.

That is, the sacrificial seal shall not be ruptured, e.g., by way of target breaking points as described with regard to the rupture disc above but shall rather be at least partially melted and thereby broken to allow a refrigerant evacuation/release from the refrigerant circuit to the outside of the heat pump system in an emergency scenario of having detected a refrigerant leakage.

A second aspect of the present disclosure is directed towards a heat pump system comprising a refrigerant circuit, a controller configured to control the heat pump system and the release device according to any of the preceding aspects for releasing the refrigerant from the refrigerant circuit to the outside of the refrigerant circuit in case of a refrigerant leakage in the refrigerant circuit. The refrigerant circuit connects a compressor, a usage side heat exchanger, an expansion valve, and a heat source side heat exchanger by refrigerant pipes to circulate a refrigerant for heat exchange. The refrigerant pipes comprise a liquid pipe and a gas pipe. The liquid pipe connects the heat source side heat exchanger to one side of the usage side heat exchanger. The gas pipe connects the other side of the usage side heat exchanger to the compressor.

It is unambiguous that the expansion valve is also arranged in said refrigerant pipes. Particularly, when the heat pump system is in a heating operation, the compressed refrigerant leaving the compressor is flown to the usage side heat exchanger, past the expansion valve to the heat source side heat exchanger and back to the compressor. In a cooling operation, the flow direction is opposite: Compressed refrigerant leaving the compressor is flown to the heat source side heat exchanger, past the expansion valve to the usage side heat exchanger and then back to the compressor.

In line with the above outlines directed to the release device alone, the configuration of a heat pump system comprising the same allows to obtain a safer and more reliable yet unexpensive heat pump system. This is achievable by the active (remote) piloting of the rupture of the breakable sacrificial seal once a refrigerant leakage is detected.

Preferably, the release device may be arranged on a release pipe branched from the liquid pipe. Alternatively, the release device may be arranged on a release pipe branched from the gas pipe. Alternatively, one release device may be arranged on the release pipe branched from the liquid pipe and another release device may be arranged on the release pipe branched from the gas pipe.

Making use of a branched off release pipe or release pipes and the corresponding arrangement of the release devices thereon allows to adapt the refrigerant release position in a manner sufficiently distant from the indoor space, in which the usage side heat exchanger is arranged.

More preferably, the heat pump system may further comprise a bypass pipe and a valve arranged in said bypass pipe. The bypass pipe may connect either the gas pipe or the liquid pipe to the release pipe. The controller is configured to open the valve upon detection of the refrigerant leakage. Vice versa, the controller is configured to keep the valve in a closed state during a normal operation of the heat pump system.

Accordingly, the provision of an openable bypass pipe connecting the gas pipe to the release pipe or the liquid pipe to the release pipe allows to obtain a simple and cheap safety mechanism configuration. This configuration requires only one release device to increase the operational safety and to reliably evacuate the refrigerant from the refrigerant circuit to the outside of the refrigerant circuit, particularly from both the gas pipe and the liquid pipe, independently of the actual arrangement position of the release device. Furthermore, the provision of one single piloted sacrificial seal eliminates the risk of an asynchronized release of refrigerant from the gas pipe and the liquid pipe once a refrigerant leakage is detected, which would otherwise be induced due to the different pressures in the gas pipe and the liquid pipe, as one release device would be on the high-pressure line and the other one would be on the low-pressure line.

Preferably, and additionally or alternatively to the aforementioned arrangement of the bypass pipe and the corresponding valve arranged therein, the usage side heat exchanger may be accommodated in an indoor unit and the heat source side heat exchanger may be accommodated in an outdoor unit. The release device may correspondingly be arranged between the indoor unit and the outdoor unit.

Other than in the conventionally known configurations, where refrigerant is released in the outdoor unit itself, which negatively affects the same, particularly the electronic components of said outdoor unit, due to the accordance of very low temperatures, the provision of the release device between the indoor unit and the outdoor unit allows to securely release the refrigerant from the refrigerant circuit without potentially harming the components of the refrigerant circuit.

More preferably, the heat pump system may thereby further comprise a first two-way valve arranged in the gas pipe and a second two-way valve arranged in the liquid pipe. The first two-way valve may be arranged in the gas pipe between a first release pipe of the release pipes and the outdoor unit, and the second two-way valve may be arranged in the liquid pipe between a second release pipe of the release pipes and the outdoor unit. The first and second two-way valves may thereby be configured to stop a refrigerant flow from the outdoor unit to the release device upon detection of refrigerant leakage.

This provides an additional safety measure, as the refrigerant outside the indoor unit and particularly outside the indoor space, in which the same is arranged, can be prevented from flowing to the indoor unit due to the stoppage of the refrigerant flow upon the leakage detection via the first and second two-way valves and the remaining part of the refrigerant can be released to the atmosphere outside the indoor space accommodating the indoor unit via the release device being arranged between the indoor unit and the outdoor unit.

Preferably, the heat pump system may further comprise a sensor configured to detect a refrigerant leakage in the refrigerant circuit. More preferably, the heat pump system may further comprise a sensor configured to detect a refrigerant leakage in the indoor unit.

Yet, this does not limit the arrangement of the sensor to a provision in the indoor unit. It rather suffices that the sensor is usable to detect a refrigerant leakage in the refrigerant circuit, preferably in the indoor unit. It can, for example, equally be arranged outside the indoor unit.

Preferably, the refrigerant in the refrigerant circuit may be carbon dioxide.

These are advantageous refrigerants, as they have a low GWP and can accordingly be released to the atmosphere, i.e., the environment outside the indoor space housing, for example, at least the indoor unit without any risks or damages to the environment.

### BRIEF DESCRIPTION OF THE DRAWINGS

Subsequently, an illustration of exemplary embodiments of a release device being arrangeable/arranged in a heat pump system according to the present disclosure will be given:
Figure 1 illustrates the constitution of the heat pump system according to a first embodiment.
Figure 2 illustrates the constitution of the heat pump system according to a second embodiment.
Figure 3 illustrates the constitution of the heat pump system according to a third embodiment.
Figure 4 illustrates the constitution of the release device for the heat pump system in the exemplary form of a fusible plug.
Figure 5 illustrates the constitution of the release device for the heat pump system in the exemplary form of a rupture disc.
Figure 6 illustrates the constitution of the release device for the heat pump system in the exemplary form of a mechanical impact device.
Figure 7 illustrates the constitution of the release device for the heat pump system in the exemplary form of an explosive charge.

### DESCRIPTION OF PREFERED EMBODIMENTS

Hereinafter, embodiments according to the present disclosure will be described in detail with reference to the accompanying drawings in order to describe the disclosure using illustrative examples. Further modifications of certain individual features described in this context can be combined with other features of the described embodiments to form further embodiments of the disclosure. Throughout the drawings, the same reference numerals are used for the same or similar elements.

The present disclosure relates to a release device 100 that is arrangeable in a refrigerant circuit of a heat pump system 10 for releasing refrigerant of the refrigerant circuit to an outside of the heat pump system 10 in case of a refrigerant leakage in the refrigerant circuit. As the present disclosure also relates to a heat pump system 10 comprising such a release device 100, the following outlines, for easier orientation, focus on describing the entire heat pump system 10 (including the release device 100, i.e., a heat pump system 10 to which the release device 100 is applied to). It nonetheless goes without saying that the release device 100 can be applied, i.e., is applicable, independently to other systems, for examples, air conditioners to provide a fail-safe mechanism when a refrigerant leakage occurs.

The heat pump system 10 of the present disclosure may be a device that performs cooling and/or heating of indoor spaces, such as in a building, through a vapor compression refrigeration cycle in the refrigerant circuit of the heat pump system 10. In the heat pump system 10, particularly in its refrigerant circuit, carbon dioxide is used as a preferred refrigerant. The selection of the refrigerant is, however, not limited to carbon dioxide. The used refrigerant may be any natural refrigerant with a low global warming potential (GWP), such as propane, etc., which could be released to the outside or the atmosphere in an emergency scenario, such as a refrigerant leakage.

The heat pump system 10 may be a single heat pump system, which includes an outdoor unit 17, which may also be referred to as heat source unit, and an indoor unit 16, which may also be referred to as usage unit or utilization-side unit. Alternatively, the heat pump system 10 may be a multi heat pump system, which includes multiple outdoor units 17 and a plurality of indoor units 16, which may also be referred to as usage units or utilization-side units. For the sake of orientation, it will now be focused on a single heat pump system.

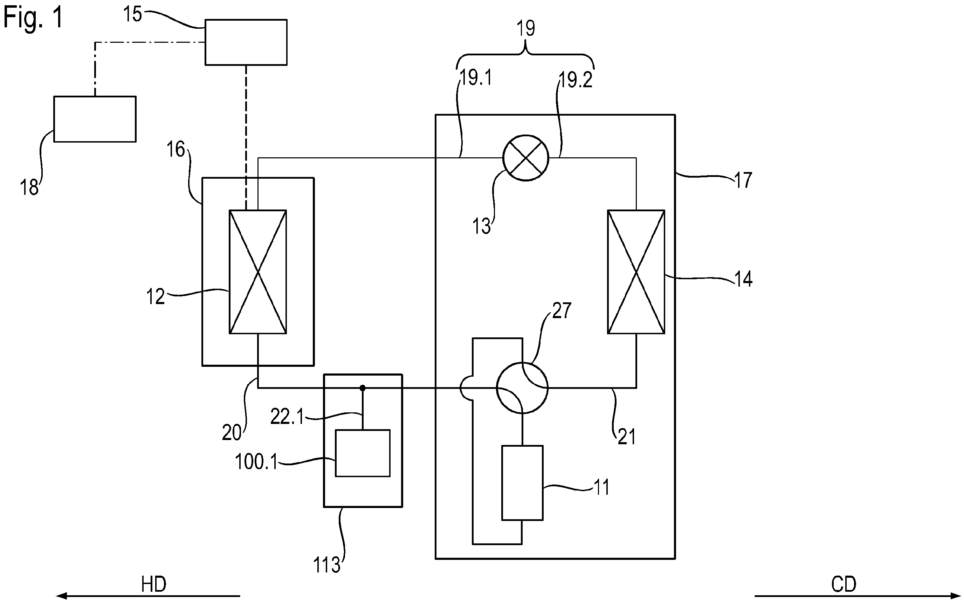

As illustrated in Figure 1, the refrigerant circuit of the heat pump system 10 is constituted by the standard and well-known features of a refrigerant circuit, namely by a compressor 11, a usage side heat exchanger 12 accommodated in the indoor unit 16, an expansion valve 13, and a heat source side heat exchanger 14 accommodated in the outdoor unit 17. These elements are connected in series in the order as listed above (when performing a heating operation) by refrigerant pipes to perform heat exchange. However, the system is not limited to the provision of one of said respective elements constituting the heat pump system 10. The heat pump system 10 may, for example, equally comprises a first expansion valve 13.1 and a second expansion valve 13.2. The outdoor unit 17 may thereby accommodate said first expansion valve 13.1, and the indoor unit 16 may accommodate the second expansion valve 13.2.

To switch between a heating operation flow direction HD and a cooling operation flow direction CD of the carbon dioxide circulated in the refrigerant circuit as the preferred refrigerants, switching means, here a four-way switching valve 27, which will not be described in more detail, may be provided in the refrigerant circuit. For easier orientation, the two arrows in the bottom section of Figure 1 illustrate the heating operation flow direction HD and the cooling operation flow direction CD of the refrigerant circuit.

The refrigerant pipes connect the compressor 11, the usage side heat exchanger 12, the expansion valve 13, and the heat source side heat exchanger 14 to circulate the refrigerant for heat exchange during a standard operation, such as heating or cooling, of the heat pump system 10. Depending on whether the refrigerant leaving the compressor 11 flows towards the usage side heat exchanger 12 or the heat source side heat exchanger 14, the heat pump system 10 performs either a heating operation (when it flows towards the usage side heat exchanger 12 first in the heating operation flow direction HD) or a cooling operation (when it flows towards the heat source side heat exchanger 14 first in the cooling operation flow direction CD).

The refrigerant pipes can, in general, be split in two different pipes: A liquid pipe 19 and a gas pipe 20. The liquid pipe 19 connects the heat source side heat exchanger 14 to one side of the usage side heat exchanger 12. As shown in Figure 1, the expansion valve 13 is arranged in said liquid pipe 19 and accordingly splits the liquid pipe 19 in a first part 19.1 of the liquid pipe 19 and a second part 19.2 of the liquid pipe 19.

The gas pipe 20 connects the remaining, other side of the usage side heat exchanger 12 to the compressor 11. During a heating operation of the heat pump system 10, compressed refrigerant in the form of a high-temperature and high-pressure vapor flows from the compressor 11 via the gas pipe 20 to the usage side heat exchange 12, which acts as a condenser during the heating operation of the heat pump system 10. In the usage side heat exchanger 12, the refrigerant releases the heat to the air inside the indoor unit 16 and thereby releases heat to the indoor space to produce warm inside air and accordingly traverses the refrigerant to a liquid state. Subsequently, the high-pressure and high temperature liquid flows via the first part 19.1 of the liquid pipe 19 to the expansion valve 13, which traverses the refrigerant to a low-pressure and low temperature liquid. Said low-pressure and low temperature liquid flows via the second part 19.2 of the liquid pipe 19 to the heat source side heat exchanger 14. Therein, the refrigerant absorbs heat from the surrounding air and accordingly boils to vapor, i.e., it evaporates. Said low-pressure and low temperature vapor is then returned to the compressor 11 via a third pipe 21 before the heating cycle can start again by compressing the said low-pressure and low temperature vapor in the compressor 11. The aforesaid explains the heating cycle of the heat pump system 10, wherein the refrigerant is flown in the heating operation flow direction HD. The cooling operation uses the same structural devices as mentioned above but the refrigerant flows in an opposite flow direction, namely the cooling operation flow direction CD. In this cooling operation, the usage side heat exchanger 12 acts as the evaporator and the heat source side heat exchanger 14 acts as the condenser.

As is apparent, e.g., from Figure 1, the heat pump system 10 according to the presently described preferred embodiments further comprises a sensor 15. The sensor 15 is a refrigerant sensor that is configured to detect a refrigerant leakage in the refrigerant circuit. Put differently, the sensor 15 permanently observes whether refrigerant particles can be detected outside the refrigerant circuit. In an even more preferred configuration, the refrigerant sensor 15 may be provided to detect a refrigerant leakage in the indoor unit 16 or in the indoor space, in which the indoor unit 16 is arranged. As indicated by the dashed line in Figure 1, the preferred embodiment is exemplarily directed to a detection of a potential refrigerant leakage in the indoor unit 16. Yet, it is not limited thereto, and the leakage could be detected at other positions in the refrigerant circuit. At the same time, it may also be possible that more than one sensor 15 is provided to observe the potential occurrence of a refrigerant leakage in the refrigerant circuit.

The heat pump system 10 also comprises a controller 18, which is configured to control the heat pump system 10. During a normal operation, said controller 18 is configured to control the cooling and heating operations of the heat pump system 10, and, in particular, the operation and interplay of the compressor 11, the usage side heat exchanger 12, the expansion valve 13, and the heat source side heat exchanger 14 thereof in order to provide an efficient heating or cooling operation of the heat pump system 10.

Furthermore, and as illustrated by the dash dot line in Figure 1, the controller 18 is connected to the sensor 15 and is configured to process the signal inputs of the sensor 15 indicating a normal operation, i.e., no detected refrigerant outside the sealed refrigerant circuit, or a dangerous situation, particularly in the form of a detected refrigerant leakage, that requires action.

This action may be controlling an active triggering of a release device 100, whose configuration will be described in more detail below. The release device 100 is connectable, in the presently described preferred embodiment of the present disclosure connected, to the refrigerant circuit of the heat pump system 10 to release the refrigerant from the refrigerant circuit of the heat pump system 10 to an outside of the heat pump system 10 in case of a detection of the refrigerant leakage in the refrigerant circuit via the sensor 15 and the control of the controller 18.

To ensure that the release device 100 releases the refrigerant to the environment and not to the indoor space, in which the indoor unit 16 accommodating the usage side heat exchanger 12 is arranged, the release device 100 is arranged on a release pipe 22. Said release pipe 22, and thereby the release device 100, is arranged between the indoor unit 16 and the outdoor unit 17. At least a part of the release pipe 22 and the release device 100 are accommodated in a release device casing 113.

The release pipe 22 may thereby be branched off either from the liquid pipe 19 or the gas pipe 20 of the refrigerant circuit. It may also be possible that two release pipes 22 comprising two release devices may be provided, wherein one release pipe 22 thereof is branched off from the liquid pipe 19 and the other release pipe 22 thereof is branched off from the gas pipe 20.

Yet, as the different pressures prevailing in the gas pipe 20 and the liquid pipe 19 and acting on the two release devices 100 arranged therein may cause different opening times of the release devices 100, the exemplary configuration of Figure 1 instead focusses on the provision of a single release pipe 22 comprising one release device 100.

As shown in Figure 1, the release device 100 is housed in the release device casing 113 and the release device 100 is branched off from the gas pipe 20, as the refrigerant in a high-pressure and a high temperature vapor state can be easily released from the gas pipe 20.

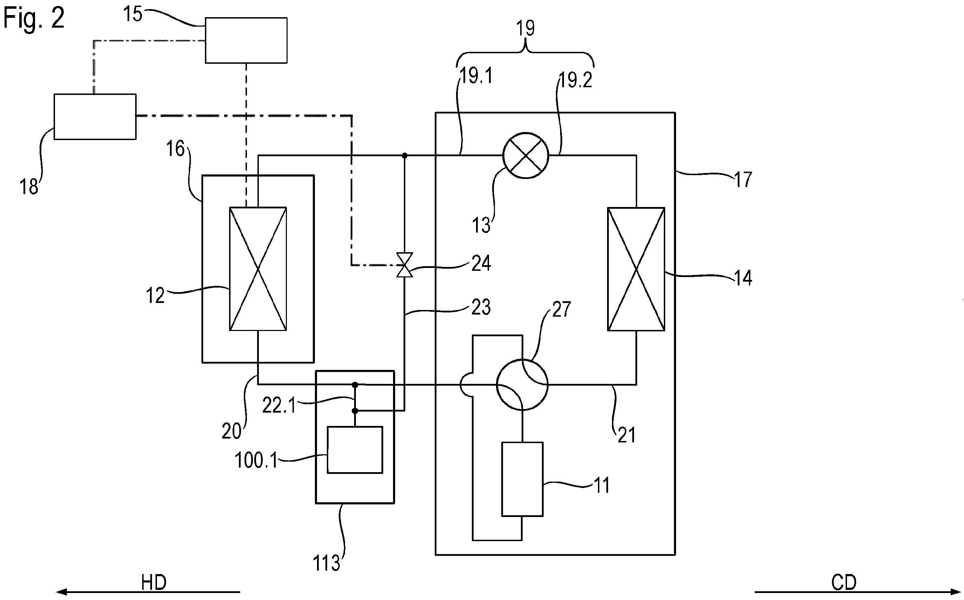

Figure 2, in this connection, illustrates an even more preferred, second embodiment of the present disclosure.

The general structure of the heat pump system 10 is identical to the one described with reference to Figure 1 and will, therefore, not explained once again in detail.

In comparison to the embodiment of Figure 1, the embodiment of Figure 2 additionally comprises a bypass pipe 23 comprising a valve 24, which may thus also be understood as a bypass valve 24.

In the exemplary illustration of the second embodiment in Figure 2 of the present disclosure, the release pipe 22, just like in Figure 1, is branched off from the gas pipe 20 and the bypass pipe 23 additionally connects the (remaining) liquid pipe 19 to said release pipe 22. Put differently, both the liquid pipe 19 and the gas pipe 20 are connected to and merge into the release pipe 22 in the embodiment of Figure 2. This allows to obtain a faster evacuation of the refrigerant from the refrigerant circuit. In the second embodiment in Figure 2, a part of the release pipe 22, the release device 100, the bypass pipe 23 and the bypass valve 24 are accommodated in a release device casing 113.

The controller 18 is configured to open the bypass valve 24 upon the detection of the refrigerant leakage via the sensor 15 to allow refrigerant in the bypass pipe 23 to flow to the release pipe 22 when the refrigerant sensor 15 sends an information to the controller 18 that refrigerant has been detected outside the refrigerant circuit. Vice versa, the controller 18 is configured to control the bypass valve 24 in such a manner that it is kept closed during a normal operation of the heat pump system 10. Accordingly, no refrigerant can flow via the bypass pipe 23 and its bypass valve 24 to the release pipe 22 and the connected release device 100. The bypass valve 24 may, thus, be configured as a bypass two-way valve or a bypass check valve, which merely allows a refrigerant flow towards the release pipe 22 and away from the gas pipe 20 and liquid pipe 19 once the controller 18 induced an opening of the same.

Even though not illustrated, it may alternatively be possible to branch off the release pipe 22 from the liquid pipe 19 and to additionally provide a bypass pipe 23 that connects the remaining gas pipe 20 to the release pipe 22.

Preferably, the release pipe 22 is branched off from the liquid pipe 19 and the bypass pipe 23 is connected to the remaining gas pipe 20 and the release pipe 22. Branching off the release pipe from the liquid pipe is advantageous, as the liquid pipe 19 maintains, on average during the heating operation as well as during the cooling operation, a higher pressure than in the gas pipe 20.

This is the case, as the pressure in the gas pipe 20 may be higher during the heating operation but is lower during the cooling operation. Hence, the constantly high pressure level in the liquid pipe 19 allows to obtain a secure and reliable opening of the release device 100.

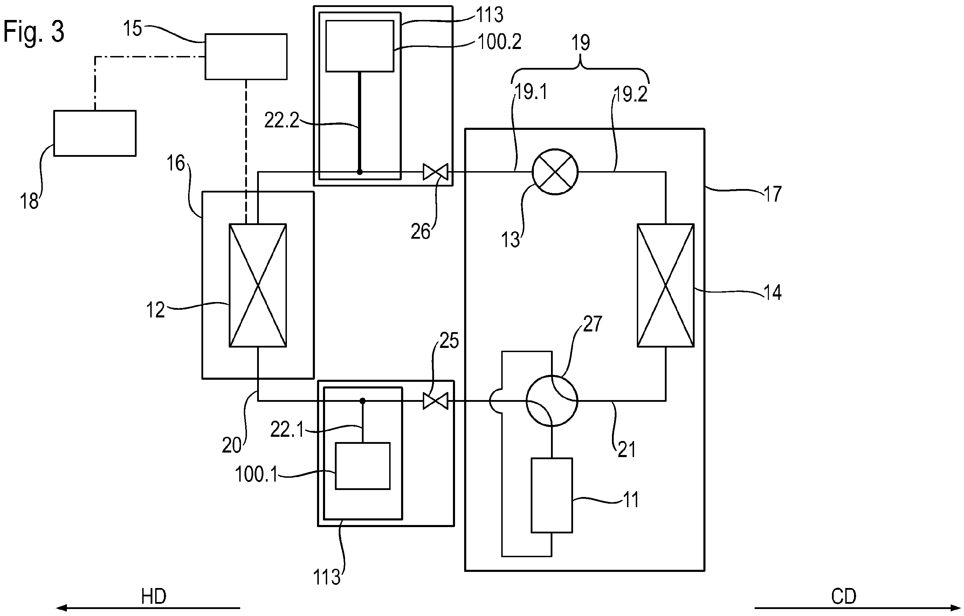

A third embodiment of the heat pump system 10 according to the present disclosure is illustrated in Figure 3.

The general structure of the heat pump system 10 is identical to the one described with reference to Figure 1 and will, therefore, not explained once again in detail.

In comparison to the embodiment of Figure 1 and other than the embodiment of Figure 2, which merges the refrigerant flows via the bypass pipe 23 and the release pipe 22 to a "bundled" flow to a single release device 100 arranged in (here at the end of) the release pipe 22, the embodiment of Figure 3 comprises two release pipes 22, i.e., a first release pipe 22.1 and a second release pipe 22.2. Accordingly, the embodiment of Figure 3 omits the bypass pipe 23 comprising the bypass valve 24 of Figure 2.

In the third embodiment in Figure 3, a part of a first release pipe 22.1, a first release device 100.1, a first two-way valve 25, a second release pipe 22.2, a second release device 100.2 and a second two-way valve 26 are accommodated in a release device casing 113.

Instead, the embodiment of Figure 3 comprises a first two-way valve 25 arranged in the gas pipe 20 and a second two-way valve 26 arranged in the liquid pipe 19. As shown in Figure 3, the first two-way valve 25 is arranged in the gas pipe 20 between a first release pipe 22.1 of the release pipes 22 and the outdoor unit 17 accommodating the heat source side heat exchanger 14. Further, the second two-way valve 26 is arranged in the liquid pipe 19 between a second release pipe 22.2 of the release pipes 22 and said outdoor unit 17. Both the first two-way valve 25 and the second two-way valve 26, which may be motorized valves, are configured to stop a refrigerant flow from the outdoor unit 17 to the release device 100 upon detection of refrigerant leakage. That is, once the sensor 15 detects a refrigerant leakage and provides corresponding information to the controller 18, the controller 18 instructs the first two-way valve 25 and the second two-way valve 26 to close, i.e., to block the refrigerant flow through the refrigerant circuit.

This enables to prevent an additional refrigerant flow towards the indoor space in which the indoor unit 16 accommodating the usage side heat exchanger 12 is arranged. Shutting down the refrigerant flow actively keeps the amount of refrigerant that can leak from the circuit as low as possible. On top of that, the amount of refrigerant that cannot be prevented from flowing to the release device 100 upon detection of the leakage via the closing of the first two-way valve 25 and the second two-way valve 26, i.e., the "trapped" refrigerant flowing to and from the indoor unit 16 accommodating the usage side heat exchanger 12 is evacuated from the refrigerant circuit upon detection of refrigerant leakage via said release device 100. As shown in Figure 3, there might be a first release device 100.1 arranged on the first release pipe 22.1 and a second release device 100.2 arranged on the second release pipe 22.2. At the same time and even though not shown, it might equally be possible to merge said first release pipe 22.1 and said second release pipe 22.2 to release the trapped refrigerant through one single release device 100 upon detection of refrigerant leakage. In other words, the provision, position, and control of the first two-way valve 25 and the second two-way valve 26 may equally be applicable to the configuration illustrated in Figure 2.

In the third embodiment in Figure 3, a part of the first release pipe 22.1, the first release device 100.1, the first two-way valve 25, the second release pipe 22.2, the second release device 100.2 and the second two-way valve 26 are accommodated in a release device casing 113.

The present disclosure is however not limited to said structural configuration. It may, for example, also be possible to additionally provide the first two-way valve 25 and the second two-way valve 26 to the embodiment of Figure 2. This allows to combine the advantageous blockage of any refrigerant to and from the indoor unit 16 by way of the first two-way valve 25 and the second two-way valve 26 and the synchronized refrigerant release by way of a single bypass valve and its arrangement on one single release pipe leading to the release device 100.

The first, second, and third embodiment as illustrated in Figures 1, 2, and 3 share the provision of at least one release device 100 as the crucial element for releasing the refrigerant from the refrigerant circuit to the outside of the refrigerant circuit in case of the detection of a refrigerant leakage in the refrigerant circuit. Thus, potential ways of carrying out said release device 100 will now be described in more detail. The following different release device configurations can thereby be applied to each of the first, second, and third heat pump system embodiments.

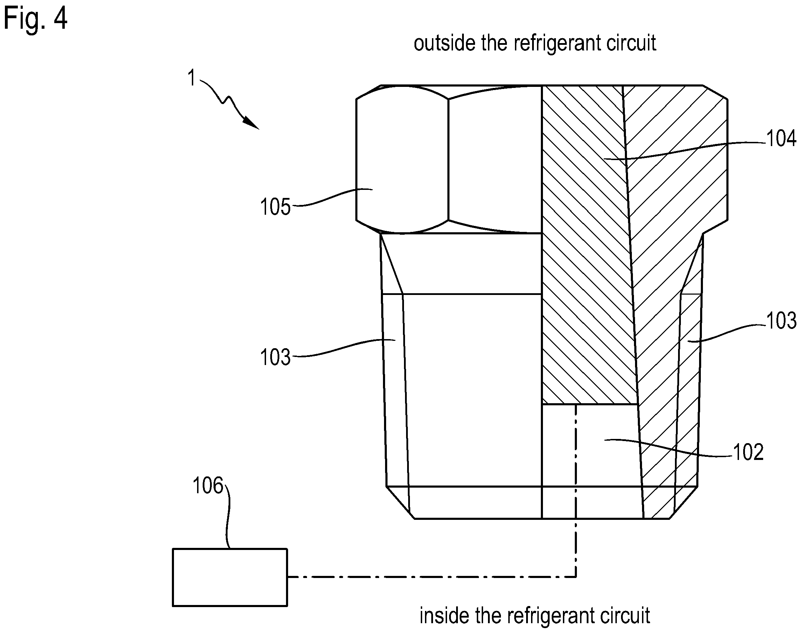

Figure 4 illustrates a half-cross section of the release device 100. As is apparent from Figure 4, the release device 100 may, for example, have the shape of a screw, particularly a screw having a hexagonal screw head 105 for facilitated mounting. That is, the release device 100 comprises a body 101, which is connectable to the refrigerant circuit. This body 101 may, for example, be made of copper or steel. The connection and fixation of the release device 100 in the refrigerant circuit, particularly at a position of the refrigerant pipes away from the indoor space, in which the indoor unit 16 is arranged, is achieved by way of an external/male thread 103 on the outside of the body 101 that can interact with, e.g., a female thread of one of the refrigerant pipes to tightly seal the interconnection of the body 101 of the release device 100 and the refrigerant circuit by way of applying an rotational force on the hexagonal screw head 105 via a hexagon wrench. This screw-connection emphasizes that the release device 100 may be understood as a disposable that is easily replaceable to keep the maintenance costs and the maintenance time as low as possible.

To release the refrigerant from the refrigerant circuit, which will be described in more detail below, the body 101 further comprises a release opening 102. As is apparent from said Figure 4, the release opening 102 of the body 101 is, during a normal operation of the heat pump system 10, gas-tightly sealed by a breakable sacrificial seal 104. That is, the breakable sacrificial seal 104 blocks any gas-leakage through the breakable sacrificial seal 104 from inside the refrigerant circuit to outside the refrigerant circuit and, accordingly, through the release opening 102 of the body 101 during a normal operation of the heat pump system 10, as the breakable sacrificial seal 104 seals the release opening 102 and, thereby, the refrigerant circuit from the outside of the refrigerant circuit.

To nonetheless obtain the refrigerant evacuation/release from the refrigerant circuit of the heat pump system 10 to an outside of the heat pump system 10 through the body 101 in case of a refrigerant leakage in the refrigerant circuit, the release device 100 furthermore comprises a trigger mechanism 106. Even though not illustrated in Figure 4, said trigger mechanism 106 is connectable and controllable by the controller 18, in the present description of the entire heat pump system 10 connected and controlled by the controller 18. Once the refrigerant leakage in the refrigerant circuit is detected via the sensor 15, the controller 18 accordingly controls the trigger mechanism 106 to actively trigger the breakage of the sacrificial seal 104. As such, the breakable sacrificial seal 104 is no longer constituted as a material that bursts at a predetermined pressure, as known from the prior art. Instead, the trigger mechanism 106 provides an active control of the release device 100 that is not fully dependent of the pressure prevailing in the refrigerant circuit. That is, a flow path is formed from the inside of the system to the outside (see Figure 4) once a control signal linked to a refrigerant leakage is received. It may thereby also be possible that the body 101 is reusable and merely the breakable sacrificial seal 104 is a replaceable disposable.

The weakening, and finally the breakage of the sacrificial seal 104 may be achieved by various ways. In this connection, the ways of carrying out the active triggering of the breakage of the sacrificial seal 104 is not limited to a total breakage of the breakable sacrificial seal 104 via the trigger mechanism. Instead, it may suffice to weaken the breakable sacrificial seal 104 to such a point that the pressure prevailing in the refrigerant circuit being connected to the release device 100 finally breaks the breakable sacrificial seal 104. Vice versa, the breakable sacrificial seal 104 is configured to be strong enough to resist the risk of breakage during a normal operation of the heat pump device 10.

In this connection, the trigger mechanism 106 may, for example, be constituted as a heater, for example, in the form of a resistive member or an inductive member, that increases the temperature of the sacrificial seal 104 and thereby triggers the breakage of the breakable sacrificial seal 104.

As illustrated in Figure 4, the breakable sacrificial seal 104 may be constituted as a fusible plug, which can be heated by the resistive member or the inductive member to weaken and break the breakable sacrificial seal 104 by melting the same.

In the illustrated preferred configuration, the fusible plug is represented by a fusible alloy, which has a lower melting temperature then the body 101 and blocks the release opening 102 during a normal operation of the heat pump system 10. That is, the fusible plug, as the exemplary form of the breakable sacrificial seal 104, comprises a melting point at a predefined melting temperature, so that the fusible plug is melted when heated by the heater, as the trigger mechanism 106, after a control instruction to actively break the sacrificial seal 104 has been received.

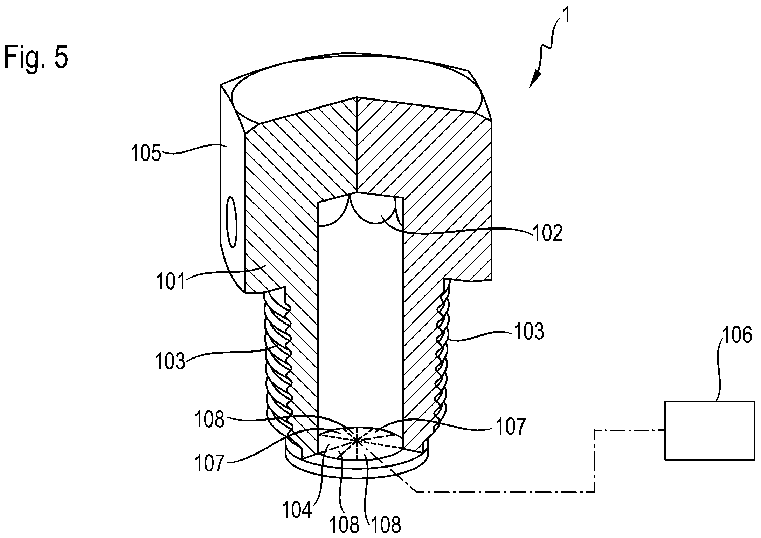

In a further configuration of the release device 100 using a heater in the form of a resistive member or an inductive member as the trigger mechanism 106 to actively trigger the breakage of the sacrificial seal 104, the fusible plug is replaced by a rupture disc, as illustrated in Figure 5.

In line with Figure 4, the rupture disc, as the breakable sacrificial valve 104, is inserted into the body 101 of the release device 100 to seal and block the release opening 102 during the normal operation of the heat pump system 10. Other than in Figure 4, the release opening 102 according to Figure 5 is constituted by a plurality of openings 102 in the screw heat 105, wherein the openings 102 enable to connect the interior of the refrigerant circuit with the environment and to evacuate the refrigerant from the refrigerant circuit thereto.

The rupture disc closes an end portion of the release device 100 that is orientated towards the inside of the refrigerant circuit, whereas the embodiment according to Figure 4 closes an end portion of the release device 100 that is orientated towards the outside of the refrigerant circuit. Yet, both configurations are not limited to said positions of its sacrificial seal 104. It may, for example, equally be possible to arranged said configurations of the sacrificial seal 104 at the end portions or at an intermediate portion along the longitudinal dimension of the body 101.

The rupture disc according to the embodiment of Figure 5 is a disc made of a material having a first mechanical strength up to a predefined temperature and a second mechanical strength lower than the first mechanical strength at a temperature higher than the predefined temperature, whereby the rupture disc is weakened when heated by the heater so that the rupture disc is breakable by the pressure of the refrigerant in the refrigerant circuit thereby breaking the sacrificial seal 104.

The predefined temperature is thereby higher than the maximum refrigerant temperature during the normal operation of the heat pump system 10 under full load as well as higher than the maximum temperature during transport and storage of the release device 100. Further, the first mechanical strength is higher than the maximum pressure prevailing in the refrigerant circuit to prevent an accidental breakage of the rupture disc during the normal operation of the heat pump system 10. At the same time, the second mechanical strength is lower than the first mechanical strength and also sufficiently low that at least the refrigerant pressure inside the refrigerant circuit can break the weakened rupture disc. It may also be possible that the heating via the heater weakens the rupture disc to such an extent that the pressure inside the refrigerant circuit does not have to be taken into consideration.

To define a precise opening of the rupture disc, it is apparent from Figure 5 that the rupture disc is provided with crossing lines acting as target breaking points 107 that separate the rupture disc into a plurality of circle sections 108. The rupture disc is already structurally weakened at this points 107 due to a pre-induced plastic deformation of the rupture disc, for example, via a reduction of the thickness of the rupture disc.

However, the release device 100 according to the present disclosure is not limited to a temperature-induced weakening and thereby breaking of the sacrificial seal 104.

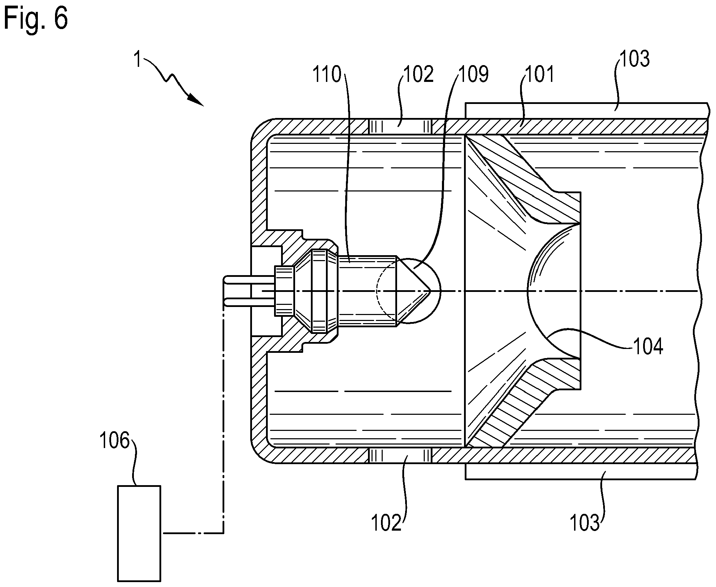

Figure 6 illustrates a further example for an implementation of the trigger mechanism 106 of the release device 100. In line with the preceding examples of Figures 4 and 5, the release device 100 according to Figure 6 comprises a body 101 and a release opening 102. In the illustrated configuration, the release device 100 comprises two release openings that extends perpendicular to the longitudinal axis of the body 101. In the embodiment of Figure 6, the breakable sacrificial seal 104 interacts with a mechanical impact device, which is connected to and controlled by the trigger mechanism 106 and is furthermore configured to induce a mechanical impact on the sacrificial seal 104 and thereby break the sacrificial seal 104. To do so, mechanical impact device comprises an impactor in in the form of a needle 109. This needle 109 is pushed towards the sacrificial seal 104 by a motor 110 upon the active triggering once a refrigerant leakage has been detected. This may cause a penetration of the needle 109 into the sacrificial seal 104 and, thus, a breaking of the sacrificial seal 104 to release the refrigerant from the refrigerant circuit to the outside of the refrigerant circuit.

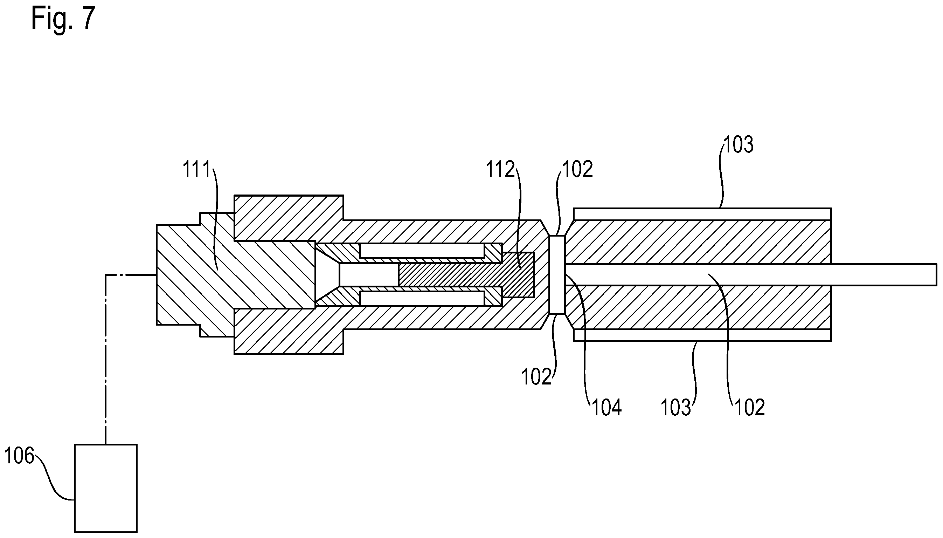

Figure 7 illustrates a further example for an implementation of the trigger mechanism 106 of the release device 100. In line with the preceding configurations of Figures 4, 5, and 6, the release device 100 according to Figure 7 comprises a body 101 having a male thread 103 on its outer side and a release opening 102. Said opening 102 is blocked and sealed by the breakable sacrificial seal 104 to prevent any refrigerant flow to the outside of the refrigerant circuit during a normal operation of the heat pump system.

In the embodiment of Figure 7, the trigger mechanism 106 comprises an explosive charge 112. In an emergency scenario, the breakable sacrificial seal 104 interacts with the explosive charge 112, which is connected to and controlled by the trigger mechanism 106 and is furthermore configured to induce an explosion impact on the sacrificial seal 104 and thereby break the sacrificial seal 104. To do so, the trigger mechanism 106 actively triggering the breakage by the control of the controller 18 is connected to an initiator 111, which ignites the explosive charge 112 and thereby breaks the sacrificial seal 104 resulting in an opening of the release openings 102. Particularly, the detonation on the sacrificial seal 104 initiated by the initiator 111 ruptures the sacrificial seal 104 and accordingly opens the release opening 102 upon the active triggering once a refrigerant leakage has been detected via the sensor 15. Consequently, the refrigerant can be released/evacuated from the refrigerant circuit.

Instead of solely opening the breakable sacrificial seal 104 by way of the explosive charge 112 to release the refrigerant via the release openings 102, it may also be possible that the entire section of the release device 100 on a side of the breakable sacrificial seal 104 outside the breakable sacrificial seal 104 is separated from the remainder of the release device 100 to allow a safe and reliable refrigerant release/ evacuation from the refrigerant circuit once a leakage is detected.

### Reference Signs List

- 10: heat pump system
- HD: heating operation flow direction
- CD: cooling operation flow direction
- 11: compressor
- 12: usage side heat exchanger
- 13: expansion valve
- 14: heat source side heat exchanger
- 15: (refrigerant) sensor
- 16: indoor unit
- 17: outdoor unit
- 18: controller
- 19: liquid pipe
- 19.1: first part of the liquid pipe
- 19.2: second part of the liquid pipe
- 20: gas pipe
- 21: third pipe
- 22: release pipe
- 22.1: first release pipe
- 22.2: second release pipe
- 23: bypass pipe
- 24: bypass valve
- 25: first two-way valve
- 26: second two-way valve
- 27: four-way switching valve
- 100: release device
- 100.1: first release device
- 100.2: second release device
- 101: body
- 102: release opening
- 103: male thread
- 104: breakable sacrificial seal
- 105: hexagonal screw head
- 106: trigger mechanism
- 107: target breaking points
- 108: circle sections
- 109: needle
- 110: motor
- 111: initiator
- 112: explosive charge
- 113: release device casing

## Claims

1. A release device (100) for releasing refrigerant from a refrigerant circuit of a heat pump system (10) to an outside of the heat pump system (10) in case of a refrigerant leakage in the refrigerant circuit, the refrigerant circuit connecting a compressor (11), a usage side heat exchanger (12), an expansion valve (13), and a heat source side heat exchanger (14), wherein the release device (100) comprises:
a body (101) connectable to the refrigerant circuit and having a release opening (102),
a breakable sacrificial seal (104) gas-tightly sealing the release opening (102) and thereby the refrigerant circuit from the outside of the refrigerant circuit, and
a trigger mechanism (106) connectable to and controllable by a controller (18) to actively trigger the breakage of the sacrificial seal (104) upon detection of a refrigerant leakage in the refrigerant circuit to release the refrigerant from the refrigerant circuit to the outside of the refrigerant circuit.

2. The release device (100) according to claim 1, wherein the breakable sacrificial seal (104) is a disposable.

3. The release device (100) according to claim 1 or 2, wherein the trigger mechanism (106) comprises a heater for increasing the temperature of the sacrificial seal (104) and thereby triggering the breakage of the sacrificial seal (104).

4. The release device (100) according to claim 3, wherein the heater is a resistive member or an inductive member.

5. The release device (100) according to claim 3 or 4, wherein the sacrificial seal (104) is a rupture disc made of a material having a first mechanical strength up to a predefined temperature and a second mechanical strength lower than the first mechanical strength at a temperature higher than the predefined temperature, whereby the rupture disc is weakened when heated by the heater so that the rupture disc is breakable by the pressure of the refrigerant in the refrigerant circuit thereby breaking the sacrificial seal (104) .

6. The release device (100) according to claim 5, wherein the rupture disc has target breaking points (107), preferably crossing lines, more preferably crossing lines separating the rupture disc into a plurality of circle sectors (108).

7. The release device (100) according to claim 3 or 4, wherein the sacrificial seal (104) is a fusible plug made of a material having a melting point at a predefined melting temperature so that the fusible plug is melted when heated by the heater thereby breaking the sacrificial seal (104).

8. The release device (100) according to claim 1 or 2, wherein the trigger mechanism (106) comprises a mechanical impact device (109) configured to induce a mechanical impact on the sacrificial seal (104) and thereby break the sacrificial seal (104).

9. The release device (100) according to claim 1 or 2, wherein the trigger mechanism (106) comprises an explosive charge (112) configured to induce an explosion impact on the sacrificial seal (104) and thereby break the sacrificial seal (104) .

10. A heat pump system (10), comprising:
a refrigerant circuit connecting a compressor (11), a usage side heat exchanger (12), an expansion valve (13), and a heat source side heat exchanger (14) by refrigerant pipes to circulate a refrigerant for heat exchange,
wherein the refrigerant pipes comprise:
a liquid pipe (19) connecting the heat source side heat exchanger (14) to one side of the usage side heat exchanger (12), and
a gas pipe (20) connecting the other side of the usage side heat exchanger (12) to the compressor (11),
a controller (18) configured to control the heat pump system (10), and
the release device (100) according to any of the preceding claims for releasing the refrigerant from the refrigerant circuit to the outside of the refrigerant circuit in case of a refrigerant leakage in the refrigerant circuit.

11. The heat pump system (10) according to claim 10, wherein the release device/-s (100) is/are arranged on a release pipe (22) branched off from the liquid pipe (19) and/or the gas pipe (20).

12. The heat pump system (10) according to claim 11, further comprising:
a bypass pipe (23) connecting the gas pipe (20) or the liquid pipe (19) to the release pipe (22), and
a valve (24) arranged in the bypass pipe (23),
wherein the controller (18) is configured to open the valve (24) upon detection of the refrigerant leakage.

13. The heat pump system (10) according to claim 11 or 12, wherein the usage side heat exchanger (12) is accommodated in an indoor unit (16) and the heat source side heat exchanger (14) is accommodated in an outdoor unit (17), wherein the release device (100) is arranged between the indoor unit (16) and the outdoor unit (17).

14. The heat pump system (10) according to claim 13, further comprising:
a first two-way valve (25) arranged in the gas pipe (20) and a second two-way valve (26) arranged in the liquid pipe (19),
wherein the first two-way valve (25) is arranged in the gas pipe (20) between a first release pipe (22.1) of the release pipes (22) and the outdoor unit (17), and
the second two-way valve (26) is arranged in the liquid pipe (19) between a second release pipe (22.2) of the release pipes (22) and the outdoor unit (17), and
wherein the first and second two-way valves (25, 26) are configured to stop a refrigerant flow from the outdoor unit (17) to the release device (100) upon detection of refrigerant leakage.

15. The heat pump system (10) according to any one of claims 10 to 14, further comprising a sensor (15) configured to detect a refrigerant leakage in the refrigerant circuit.

16. The heat pump system (10) according to any of claims 10 to 15, wherein the refrigerant in the refrigerant circuit is carbon dioxide.
